# EUROPÄISCHE PATENTSCHRIFT

(11) **EP 1 917 581 B1**
(45) Veröffentlichungstag und Bekanntmachung des Hinweises auf die Patenterteilung: **22.06.2011**
(21) Anmeldenummer: 06792569.3
(22) Anmeldetag: 26.07.2006
(51) Int. Cl.: G06F 9/38

(54) **VERFAHREN UND VORRICHTUNG ZUR STEUERUNG EINES RECHNERSYSTEMS**
METHOD AND DEVICE FOR CONTROLLING A COMPUTER SYSTEM
PROCEDE ET DISPOSITIF POUR COMMANDER UN SYSTEME INFORMATIQUE

(30) Priorität: 08.08.2005 DE 102005037228
(43) Veröffentlichungstag der Anmeldung: 07.05.2008
(73) Patentinhaber: ROBERT BOSCH GMBH, 70442 Stuttgart (DE)
(72) Erfinder: WEIBERLE, Reinhard, 71665 Vaihingen/Enz (DE); MUELLER, Bernd, 70839 Gerlingen (DE); BOEHL, Eberhard, 72768 Reutlingen (DE); COLLANI, Yorck, 71717 Beilstein (DE); GMEHLICH, Rainer, 71254 Ditzingen (DE)
(86) Internationale Anmeldenummer: PCT/EP2006/064663
(87) Internationale Veröffentlichungsnummer: WO 2007/017378

(56) Entgegenhaltungen:
- DE-A1- 10 349 581
- US-B1- 6 615 366

## Beschreibung

### Stand der Technik

Im Bereich eingebetteter Systeme, z.B. Automobiltechnik oder Automatisierungstechnik, gibt es Anwendungen, bei denen ein Fehler in der µC-Hardware potenziell sicherheitsrelevante Konsequenzen haben kann. Um diese Konsequenzen zu vermeiden oder die Auswirkungsschwere zu verringern, werden Überwachungsmaßnahmen verwendet, die Fehler detektieren sollen. Es gibt Anwendungen, in denen eine solche Überwachung nahezu permanent notwendig ist, in anderen Anwendungen gibt es Überwachungsfunktionen, die regelmäßig (z.B. periodisch) oder auf bestimmte Anforderungen hin, überprüfen, ob der Rechner oder auch andere Komponenten noch korrekt funktionieren.

Die Erfndungsmeldung steht im Zusammenhang mit der Anmeldung DE10332700A1. Dort wird ein Verfahren und Vorrichtung zur Umschaltung zwischen zwei Betriebsmodi einer Prozessoreinheit beschrieben. Die Prozessoreinheit hat mindestens zwei Ausführungseinheiten und die unterschiedlichen Betriebsmodi zielen darauf ab, dass die Prozessoreinheit mindestens in einem so genannten Performanzmodus als auch in einem so genannten Vergleichsmodus (VM) betrieben werden kann. Im Performanzmodus werden auf z.B. zwei Ausführungseinheiten unterschiedliche Programme/ ausgeführt. Im Vergleichsmodus werden dagegen auf beiden Ausführungseinheiten identische Programme ausgeführt und das Ergebnis beider Ausführungseinheiten miteinander verglichen und bei einer Differenz ein Fehlersignal ausgelöst.

Grundsätzlich ist es aus Sicht der Rechenleistung vorteilhaft, möglichst viele Aufgaben in einem möglichst leistungsfähigen Modus (Performanzmodus) laufen zu lassen. Dem steht gegenüber, dass gerade in sicherheitsrelevanten Anwendungen, fast alle Aufgaben mit guter Fehlererkennung berechnet werden sollen. Im Stand der Technik für solche Anwendungen ist es also schwierig oder nicht möglich einen großen Teil der Rechenleistung eines Performanzmodus zu nutzen.

Es gibt Anwendungen, die relativ komplexe Anforderungen an Fehlererkennung haben. Z.B. ist bei vielen regelungstechnischen Anwendungen eine Störung, die nur sehr kurzfristig wirkt, durch die Anwendung selbst toleriert, für transiente Fehler besteht damit an vielen Stellen keine Fehlererkennungsanforderung. Für permanente Fehler dagegen besteht diese Anforderung. Es gibt aber im Stand der Technik keine allgemein verwendbaren Möglichkeiten, diesen Anforderungskonfllkt kostenoptimal zu lösen.

Die Zeit, welche für die Umschaltung zwischen den verschiedenen Betriebsmodi (Performanzmodus, Vergleichsmodus) benötigt wird, ist nicht zu vernachlässigen. Bei einer sehr häufigen Umschaltung fällt dieser Overhead ins Gewicht. Um bei einem Schedulingproblem optimale Strategien fahren zu können, ist es aus Sicht der Anwendungssoftware notwendig, auch kurzfristig einen häufigeren Wechsel von Aufgaben zu veranlassen.

Aus der DE 103 49 581 A1 ist bereits ein Verfahren und eine Vorrichtung zur Umschaltung zwischen wenigstens einem Vergleichsmodus und einem Performancemodus einer Prozessoreinheit bekannt. Dabei sind den Laufzeitobjekten Kennungen zugeordnet, durch die den Laufzeitobjekten starr einer der Betriebsmodi zugeordnet wird.

### Vorteile der Erfindung

Es ist deshalb Aufgabe der Erfindung, eine Möglichkeit zur Verfügung zu stellen, durch die in einem betrachteten Zeitintervall weniger oft umgeschaltet werden muss, und somit die Rechenzeit verstärkt anderen Aufgaben zuordnen zu können. Die Erfindung soll eine Optimierung der Anzahl der durchzuführenden Umschaltungen zwischen den Modi ermöglichen und dadurch Rechenzeit einsparen. Dabei wird die Kennung derart verwendet, dass das Laufzeitobjekt zu verschiedenen Zeiten in verschiedenen Betriebsmodi ausgeführt werden soll.

Es ist ebenfalls Aufgabe der Erfindung, den potenziellen Performanzgewinn eines Modus möglichst gut auszunutzen, d.h. möglichst viel Rechenleistung in einem Performanzmodus zu verwenden.

Eine weitere Aufgabe ist es, für SW-Tasks, deren Anforderungen an Fehlererkennung hauptsächlich in der Fehlererkennung permanenter Fehler bestehen, während sie für transiente Fehler keine Fehlererkennung benötigen, eine angemessene und anforderungsgerechte Implementierung darzustellen.

Vorteilhaft ist ein Verfahren zur Steuerung eines Rechnersystems mit wenigstens zwei Ausführungseinheiten beschrieben, wobei zwischen wenigstens zwei Betriebsmodi umgeschaltet wird und ein erster Betriebsmodus einem Vergleichsmodus und ein zweiter Betriebsmodus einem Performanzmodus entspricht, dadurch gekennzeichnet, dass wenigstens eine Menge von Laufzeitobjekten definiert ist, jedem Laufzeitobjekt der definierten Menge wenigstens eine Kennung zugeordnet ist und die Kennung dem Laufzeitobjekt wenigstens die beiden Betriebsmodi zuordnet.

Vorteilhaft ist ein Verfahren beschrieben, dadurch gekennzeichnet, dass die Kennung derart verwendet wird, dass der Betriebsmodus zu einem vorgebbaren oder vorgegebenen Zeitpunkt nicht gewechselt wird, wenn das Laufzeitobjekt entsprechend der Kennung zu diesem Zeitpunkt ausgeführt wird.

Vorteilhaft ist ein Verfahren beschrieben, dadurch gekennzeichnet, dass die Kennung derart verwendet wird, dass das Laufzeitobjekt abwechselnd in verschiedenen Betriebsmodi ausgeführt werden soll.

Vorteilhaft ist ein Verfahren beschrieben, dadurch gekennzeichnet, dass in der Kennung eine Information darüber enthalten ist nach höchstens wie vielen Aktivierungen eines Laufzeitobjekts in einem der Betriebsmodi, das Laufzeitobjekt in einem anderen Betriebsmodus ausgeführt werden soll.

Vorteilhaft ist ein Verfahren beschrieben, dadurch gekennzeichnet, dass in der Kennung eine Information darüber enthalten ist, nach wie vielen Aktivierungen eines Laufzeitobjekts in einem vorgebbaren Betriebsmodus, das Laufzeitobjekt mindestens einmal in einem vorgebbaren Vergleichsmodus ausgeführt werden soll.

Vorteilhaft ist ein Verfahren beschrieben, dadurch gekennzeichnet, dass in der Kennung eine Information darüber enthalten ist nach wenigstens wie vielen Aktivierungen eines Laufzeitobjekts in einem der Betriebsmodi, das Laufzeitobjekt in einem anderen Betriebsmodus ausgeführt werden soll.

Vorteilhaft ist ein Verfahren beschrieben, dadurch gekennzeichnet, dass zur Festlegung des Betriebsmodus, in dem ein Laufzeitobjekt zu einem vorgebbaren oder vorgegebenen Zeitpunkt ausgeführt werden soll, eine Information darüber verwendet wird, in welchem Betriebsmodus das Laufzeitobjekt zuvor ausgeführt wurde.

Vorteilhaft ist ein Verfahren beschrieben, dadurch gekennzeichnet, dass wenigstens ein Teil der Information inkrementiert oder dekrementiert wird.

Vorteilhaft ist ein Verfahren beschrieben, dadurch gekennzeichnet, dass zur Festlegung des Betriebsmodus, in dem ein Laufzeitobjekt zu einem vorgebbaren oder vorgegebenen Zeitpunkt ausgeführt werden soll, eine Information darüber verwendet wird, in welchem Betriebsmodus sich das Rechnersystem befindet.

Vorteilhaft ist ein Verfahren beschrieben, dadurch gekennzeichnet, dass das Rechnersystem zur Festlegung des Betriebsmodus, in dem ein Laufzeitobjekt zu einem vorgebbaren oder vorgegebenen Zeitpunkt ausgeführt werden soll, eine Information darüber verwendet wird, in welchem Betriebsmodus sich das Rechnersystem befindet.

Vorteilhaft ist ein Verfahren beschrieben, dadurch gekennzeichnet, dass zur Festlegung des Betriebsmodus, in dem ein Laufzeitobjekt zu einem vorgebbaren oder vorgegebenen Zeitpunkt ausgeführt werden soll, eine Information darüber verwendet wird, in welcher Rückfallebene sich das Rechnersystem befindet.

Vorteilhaft ist ein Verfahren beschrieben, dadurch gekennzeichnet, dass zur Festlegung des Modus, in dem ein Laufzeitobjekt zu einem vorgebbaren oder vorgegebenen Zeitpunkt ausgeführt werden soll, eine Information darüber verwendet wird, ob sich das Rechnersystem in einer Initialisierung befindet.

Vorteilhaft ist ein Verfahren beschrieben, dadurch charakterisiert, dass zur Festlegung des Modus, in dem ein Laufzeitobjekt zu einem vorgebbaren oder vorgegebenen Zeitpunkt ausgeführt werden soll, eine Information darüber verwendet wird, ob sich das Rechnersystem in einer Testphase befmdet.

Vorteilhaft ist eine Vorrichtung zur Steuerung eines Rechnersystems mit wenigstens zwei Ausführungseinheiten enthalten, mit Umschaltmitteln und mit Vergleichsmitteln, wobei zwischen wenigstens zwei Betriebsmodi umgeschaltet wird und ein erster Betriebsmodus einem Vergleichsmodus und ein zweiter Betriebsmodus einem Performanzmodus entspricht, dadurch gekennzeichnet, dass die Vorrichtung Speichermittel enthält, in denen für eine definierte Menge von Laufzeitobjekten Kennungen abgespeichert sind, wobei die Kennungen jedem Laufzeitobjekt der definierten Menge wenigstens die beiden Betriebsmodi, zuordnen.

Vorteilhaft ist eine Vorrichtung enthalten, dadurch gekennzeichnet, dass diese derart ausgestaltet ist, dass die Kennung derart verwendet wird, dass der Betriebsmodus zu einem vorgebbaren oder vorgegebenen Zeitpunkt nicht gewechselt wird, wenn das Laufzeitobjekt entsprechend der Kennung zu diesem Zeitpunkt ausgeführt wird.

Vorteilhaft ist eine Vorrichtung enthalten, dadurch gekennzeichnet, dass diese derart ausgestaltet ist, dass die Kennung derart verwendet wird, dass das Laufzeitobjekt zu verschiedenen Zeiten in verschiedenen Betriebsmodi ausgeführt werden soll.

Vorteilhaft ist eine Vorrichtung enthalten, dadurch gekennzeichnet, dass diese derart ausgestaltet ist, dass die Kennung derart verwendet wird, dass das Laufzeitobjekt abwechselnd in verschiedenen Betriebsmodi ausgeführt werden soll.

Vorteilhaft ist eine Vorrichtung enthalten, dadurch gekennzeichnet, dass diese derart ausgestaltet ist, dass in der Kennung eine Information darüber enthalten ist nach höchstens wie vielen Aktivierungen eines Laufzeitobjekts in einem der Betriebsmodi, das Laufzeitobjekt in einem anderen Betriebsmodus ausgeführt werden soll.

Vorteilhaft ist eine Vorrichtung enthalten, dadurch gekennzeichnet, dass diese derart ausgestaltet ist, dass in der Kennung eine Information darüber enthalten ist, nach wie vielen Aktivierungen eines Laufzeitobjekts in einem vorgebbaren Betriebsmodus, das Laufzeitobjekt mindestens einmal in einem vorgebbaren Vergleichsmodus ausgeführt werden soll.

Vorteilhaft ist eine Vorrichtung enthalten, dadurch gekennzeichnet, dass diese derart ausgestaltet ist, dass in der Kennung eine Information darüber enthalten ist nach wenigstens wie vielen Aktivierungen eines Laufzeitobjekts in einem der Betriebsmodi, das Laufzeitobjekt in einem anderen Betriebsmodus ausgeführt werden soll.

Vorteilhaft ist eine Vorrichtung enthalten, dadurch gekennzeichnet, dass diese derart ausgestaltet ist, dass zur Festlegung des Betriebsmodus, in dem zu einem vorgebbaren oder vorgegebenen Zeitpunkt ein Laufzeitobjekt ausgeführt werden soll, eine Information darüber verwendet wird, in welchem Betriebsmodus das Laufzeitobjekt zuvor ausgeführt wurde.

Vorteilhaft ist eine Vorrichtung enthalten, dadurch gekennzeichnet, dass wenigstens ein Teil dieser Information mittels Zählmitteln implementiert ist.

Vorteilhaft ist eine Vorrichtung enthalten, dadurch gekennzeichnet, dass Umschalt- und/oder Vergleichsmittel enthalten sind, die derart ausgestaltet sind, dass diese eine Umschaltung der Betriebsmodi in Abhängigkeit der Kennung und weiterer vorgebbarer Bedingungen durchführen kann.

Vorteilhaft sind die Vorrichtungen in einem Rechnersystem enthalten.

Weitere Vorteile und vorteilhafte Ausgestaltungen ergeben sich aus den Merkmalen der Ansprüche sowie der Beschreibung.

### Figuren

- Figur 1: beschreibt eine verallgemeinerte Darstellung einer Umschalt- und Ver- gleichseinheit
- Figur 2: beschreibt den Ablauf der Zuteilung eines Modus für den Fall, dass ein Laufzeitobjekt eine spezielle Kennung erhält, die bedeutet, dass der Modus, in dem sich das Prozessorsystem befindet, nicht gewechselt wird, wenn dem Laufzeitobjekt mit dieser speziellen Kennung Rechen- zeit zugewiesen wird
- Figur 3: beschreibt den Ablauf der Zuteilung eines Modus für den Fall, dass das Laufzeitobjekt eine spezielle Kennung erhält, welche festlegt, dass das Laufzeitobjekt wechselseitig in mehreren Modi ausgeführt werden soll.
- In Figur 4: zeigt den Ablauf bei Kopplung der Zuteilung eines Modus mit bestimm- ten Systemmodi.
- In Figur 5: ist ein Multiprozessorsystem mit zwei Ausführungseinheiten dargestellt.

### Beschreibung der Ausführungsbeispiele

Eine Ausführungseinheit kann im Folgenden sowohl einen Prozessor/Core/CPU, als auch eine FPU (Floating Point Unit), DSP (Digitaler Signalprozessor), Coprozessor oder ALU (Arithmetic logical Unit) bezeichnen.

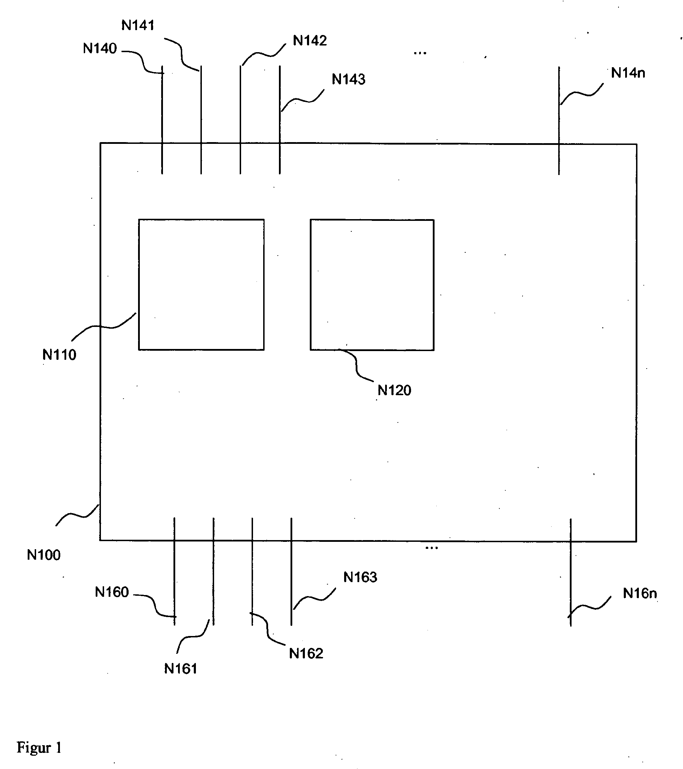

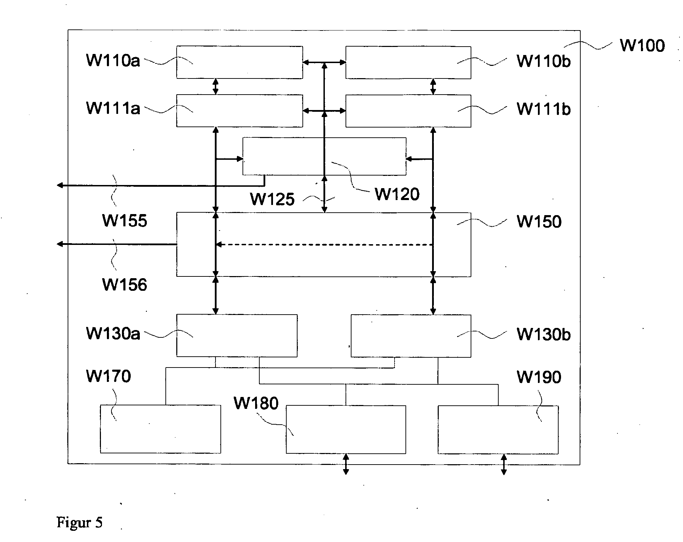

Die Erfindung bezieht sich auf ein in Figur 5 dargestelltes Multiprozessorsystem W100 mit wenigstens zwei Ausführungseinheiten W110a, W110b, einer Vergleichseinheit W120 und einer Umschalteinheit W150. In dieser Figur ist anhand eines Zweiprozessorsystem das Prinzip eines umschaltbaren Multiprozessorsystems beschrieben. In Figur 1 wird danach der allgemeine Fall einer Umschalt- und Vergleichseinheit für mehr als 2 Ausführungseinheiten beschrieben. Die vorgestellte Erfindung bezieht sich dabei immer auf den allgemeinen Fall mit 2 oder mehr Ausführungseinheiten. Die Ausführungseinheiten in Figur 5 sind jeweils über einen optionalen Zwischenspeicher W111a, W111b mit einer Vergleichseinheit W120 und einer Umschalteinheit W150 verbunden. Die Umschalteinheit W150 hat wenigstens zwei Ausgänge zu zwei Systemschnittstellen W130a, W130b. Über diese Schnittstellen können Register, Speicher oder Peripherals wie Digitale Ausgänge, D/A-Wandler, Kommunikationscontroller angesteuert werden. Dieses Multiprozessorsystem kann in wenigstens zwei Betriebsmodi betrieben werden, einem Vergleichsmodus VM und einem Performanzmodus PM. In einem Performanzmodus PM werden in den unterschiedlichen Ausführungseinheiten unterschiedliche Befehle, Programmsegmente oder Programme parallel ausgeführt. In diesem Betriebsmodus ist die Vergleichseinheit deaktiviert. Die Umschalteinheit W150 ist in diesem Betriebsmodus so konfiguriert, dass jede Ausführungseinheit über den optionalen Zwischenspeicher mit einer der Systemschnittstellen W130a, W130b verbunden ist. Über die Systemschnittstellen kann ein Resultat einer Ausführungseinheit in einen Speicher W170 geschrieben werden oder auf einen Peripheriebaustein W180, W190 ausgegeben werden. Ein Peripheriebaustein kann z.B. ein Analog-Digital-Wandler oder ein Kommunikationscontroller eines Kommunikationssystems (z.B. SPI, LIN, CAN, FlexRay) sein. Zur Deaktivierung der Vergleichseinheit gibt es mehrere Möglichkeiten. Zum einen kann man an den Vergleicher ein Signal führen, mit dem dieser aktiviert oder deaktiviert wird. Dazu ist im Vergleicher eine zusätzliche Logik einzufügen, die dies durchführen kann. Eine weitere Möglichkeit ist es, dem Vergleicher keine zu vergleichenden Daten zuzuführen. Eine dritte Möglichkeit ist es, auf Systemebene das Fehlersignal des Vergleichers zu ignorieren. Weiter kann man auch das Fehlersignal selbst unterbrechen. Allen Möglichkeiten ist gemeinsam, dass sie im System einen Zustand erzeugen, bei dem es keine Rolle spielt, wenn zwei oder mehr Daten, die potenziell verglichen werden, verschieden sind. Wird dieser Zustand durch eine Maßnahme im Vergleicher oder dessen Ein- oder Ausgangssignalen erreicht, dann wird der Vergleicher als passiv oder deaktiviert bezeichnet. In einem Vergleichsmodus VM werden in beiden Ausführungseinheiten W110a, W110b gleiche oder gleichartige Befehle, Programmsegmente oder Programme abgearbeitet. Über die optionalen Zwischenspeicher W111a, W111b werden die Ausgangssignale der Ausführungseinheiten an die Vergleichseinheit W120 und an die Umschalteinheit W150 geführt. In der Vergleichseinheit werden die beiden Daten auf Übereinstimmung geprüft. Nach erfolgtem Vergleich wird der Umschalteinheit über ein Statussignal W125 mitgeteilt, ob diese eines der übereinstimmenden Ergebnisse an eine der Systemschnittstellen ausgeben darf oder ob sie aufgrund einer erkannten Diskrepanz der Ergebnisse das Signal sperren muss. In diesem Fall kann von der Vergleichseinheit ein optionales Fehlersignal W155 ausgegeben werden. Dieses Fehlersignal kann anstatt von der Vergleichseinheit auch von der Umschalteinheit ausgegeben werden W156. Die Umschaltung kann dabei entweder über die Ausführung von speziellen Umschaltinstruktionen, speziellen Instruktionssequenzen, explizit gekennzeichneten Instruktionen oder durch den Zugriff auf eine bestimmte Speicheradresse durch wenigstens einen der Ausführungseinheiten des Multiprozessorsystems ausgelöst werden.

Zunächst wird in Figur 1 eine verallgemeinerte Darstellung einer Umschalt- und Vergleichseinheit dargestellt, wie sie vorzugsweise verwendet werden soll. Von den n zu berücksichtigenden Ausführungseinheiten gehen n Signale N140,..., N14n an die Umschalt- und Vergleichskomponente N100. Diese kann bis zu n Ausgangssignale N160,..., N16n aus diesen Eingangssignalen erzeugen. Im einfachsten Fall, dem "reinen Performanzmodus", werden alle Signale N14i auf die entsprechenden Ausgangssignale N16i geleitet. Im entgegen gesetzten Grenzfall, dem "reinen Vergleichsmodus" werden alle Signale N140,..., N14n nur auf genau eines der Ausgangssignale N16i geleitet.

An dieser Figur 1 lässt sich darlegen, wie die verschiedenen denkbaren Modi entstehen können. Dazu ist in Figur 1 die logische Komponente einer Schaltlogik N110 enthalten. Diese legt zunächst fest, wie viele Ausgangssignale es überhaupt gibt. Weiter legt die Schaltlogik N110 fest, welche der Eingangssignale zu welchem der Ausgangssignalebeitragen. Dabei kann ein Eingangssignal zu genau einem Ausgangssignal beitragen. In mathematischer Form anders formuliert ist also durch die Schaltlogik eine Funktion definiert, die jedem Element der Menge {N140,...; N14n} ein Element der Menge {N160,..., N16n} zuordnet.

Die Verarbeitungslogik N120 legt dann zu jedem der Ausgänge N16i fest, in welcher Form die Eingänge zu diesem Ausgangsignal beitragen. Um beispielhaft die verschiedenen Variationsmöglichkeiten zu beschreiben, sei ohne Beschränkung der Allgemeinheit angenommen, dass der Ausgang N160 durch die Signale N141, ..., N14m erzeugt wird. Falls m = 1 entspricht dies einfach einer Durchschaltung des Signals, falls m = 2 dann werden die Signale N141, N142 verglichen. Dieser Vergleich kann synchron oder asynchron durchgeführt werden, er kann bitweise oder nur auf signifikante Bits oder auch mit einem Toleranzband durchgeführt werden.

Falls m >= 3 gibt es mehrere Möglichkeiten. Eine erste Möglichkeit besteht darin, alle Signale zu vergleichen und bei Vorhandensein mindestens zweier verschiedener Werte einen Fehler zu detektieren, den man optional signalisieren kann. Eine zweite Möglichkeit besteht darin, dass man eine k aus m -Auswahl vornimmt (k >m/2). Diese kann durch Verwendung von Vergleichern realisiert werden. Optional kann ein Fehlersignal generiert werden, wenn eines der Signale als abweichend erkannt wird. Ein möglicherweise verschiedenes Fehlersignal kann generiert werden, wenn alle drei Signale verschieden sind. Eine dritte Möglichkeit besteht darin, diese Werte einem Algorithmus zuzuführen. Dies kann beispielsweise die Bildung eines Mittelwerts, eines Medianwert, oder die Verwendung eines fehlertoleranten Algorithmus (FTA) darstellen. Ein solcher FTA beruht darauf, Extremwerte der Eingangswerte weg zu streichen und eine Art der Mittelung über die restlichen Werte vorzunehmen. Diese Mittelung kann über die gesamte Menge der restlichen Werte, oder vorzugsweise über eine in HW leicht zu bildenden Teilmenge vorgenommen werden. In diesem Fall ist es nacht immer notwendig, die Werte tatsächlich zu vergleichen. Bei der Mittelwertbildung muss beispielsweise nur addiert und dividiert werden, FTM, FTA oder Median erfordern eine teilweise Sortierung. Gegebenenfalls kann auch hier bei hinreichend großen Extremwerten optional ein Fehlersignal ausgegeben werden.

Diese verschiedenen genannten Möglichkeiten der Verarbeitung mehrerer Signale zu einem Signal werden der Kürze wegen als Vergleichsoperationen bezeichnet.

Die Aufgabe der Verarbeitungslogik ist es also, die genaue Gestalt der Vergleichsoperation für jedes Ausgangssignal - und damit auch für die zugehörigen Eingangssignale - festzulegen. Die Kombination der Information der Schaltlogik N110 (d.h. die o. g. Funktion) und der Verarbeitungslogik (d.h. die Festlegung der Vergleichsoperation pro Ausgangssignal, d.h. pro Funktionswert) ist die Modusinformation und diese legt den Modus fest. Diese Information ist im allgemeinen Fall natürlich mehrwertig, d.h. nicht nur über ein logisches Bit darstellbar. Nicht alle theoretisch denkbaren Modi sind in einer gegebenen Implementierung sinnvoll, man wird vorzugsweise die Zahl der erlaubten Modi einschränken. Zu betonen ist, dass im Fall von nur zwei Ausführungseinheiten, wo es nur einen Vergleichsmodus gibt, die gesamte Information auf nur ein logisches Bit kondensiert werden kann.

Eine Umschaltung von einem Performanz- in einen Vergleichsmodus ist im allgemeinen Fall dadurch charakterisiert, dass Ausführungseinheiten, die im Performanzmodus auf verschiedene Ausgänge hin abgebildet werden, im Vergleichsmodus auf den gleichen Ausgang hin abgebildet werden. Vorzugsweise ist dies dadurch realisiert, dass es ein Teilsystem von Ausführungseinheiten gibt, bei dem im Performanzmodus alle Eingangssignale N14i, die im Teilsystem zu berücksichtigen sind, direkt auf korrespondierende Ausgangssignale N16i geschalten werden, während sie im Vergleichsmodus alle auf einen Ausgang hin abgebildet sind. Alternativ kann eine solche Umschaltung auch dadurch realisiert werden, dass Paarungen geändert werden. Es ist dadurch dargestellt, dass man im allgemeinen Fall nicht von dem Performanzmodus und dem Vergleichsmodus sprechen kann, obwohl man in einer gegebenen Ausprägung der Erfindung die Menge der erlaubten Modi so einschränken kann, dass dies der Fall ist. Man kann aber immer von einer Umschaltung vom Performanz- in den Vergleichsmodus (und umgekehrt) sprechen.

Zwischen diesen Modi kann, über Software gesteuert, dynamisch im Betrieb umgeschaltet werden. Ausgelöst wird die Umschaltung dabei beispielsweise über die Ausführung von speziellen Umschaltinstruktionen, speziellen Instruktionssequenzen, explizit gekemzeichneten Instruktionen oder durch den Zugriff auf bestimmte Adressen durch wenigstens eine der Ausführungseinheiten des Multiprozessorsystems.

Zunächst soll die Grundidee beschrieben werden. Ein Ansatz, um die Umschaltung zwischen verschiedenen Modi des Prozessors zu koordinieren, ist es, verschiedene Softwaremodule in Laufzeitobjekten zu gruppieren, an die dann durch das Betriebssystem Rechenzeit vergeben wird. Jedes dieser Laufzeitobjekte enthält unter anderem eine Kennung darüber, in welchem Modus dieses Laufzeitobjekt ausgeführt werden soll. Wenn diesem Laufzeitobjekt durch das Betriebssystem Rechenzeit zugewiesen wird, dann wird gleichzeitig bei Bedarf der Moduswechsel durch das Betriebssystem veranlasst.

Eine wesentliche Kernidee der Erfindung ist die Möglichkeit Laufzeitobjekten eine spezielle Kennung zuordnen zu können, die bedeutet, dass der Modus, in dem sich das Prozessorsystem zu einem gegebenen Zeitpunkt befindet, nicht gewechselt wird, wenn dem Laufzeitobjekt mit dieser speziellen Kennung zu diesem Zeitpunkt Rechenzeit zugewiesen wird. Das Laufzeitobjekt wird in dem Modus ausgeführt, der gerade aktiv ist.

Eine weitere wichtige Kernidee ist die Möglichkeit dem Laufzeitobjekt eine spezielle Kennung zuzuordnen, welche festlegt, dass das Laufzeitobjekt wechselseitig in verschiedenen Modi ausgeführt werden soll. Optional kann noch angegeben sein, nach wie vielen Aktivierungen in einem der Modi zu einem anderen und zu welchem Modus gewechselt werden soll.

In einer weiteren Ausführungsform erhält ein Laufzeitobjekt eine spezielle Kennung, die festlegt, dass es nach mindestens n Ausführungen im einen Modus, mindestens einmal (m-Mal) in einem anderen ausgerührt wird.

Diese Möglichkeiten können auch kombiniert werden.

Ein Laufzeitobjekt erhält eine spezielle Kennung, die festlegt, dass es nur in einer bsstimmten Systemrückfallebene in einem bestimmten Vergleichsmodus ausgeführt wird. Systemrückfallebene bezeichnet hierbei einen gesonderten Modus des Gesamtsystems.

Ein Laufzeitobjekt erhält eine spezielle Kennung, die festlegt, dass es nur während derInitialisierung in einem bestimmten Vergleichsmodus ausgeführt wird.

Ein Laufzeitobjekt erhält eine spezielle Kennung, die festlegt, dass es während einer bestimmten Testphase im Betrieb in einem bestimmten VM ausgeführt wird. Diese Test phase kann z.B. periodisch (z.B. alle 10 ms) oder auf Anforderung hin auftreten.

Vorteilhafterweise werden die Kennungen in Speichern abgelegt.

Diese oben aufgelisteten Ideen werden im folgenden anhand von Figuren ausführlicher beschrieben.

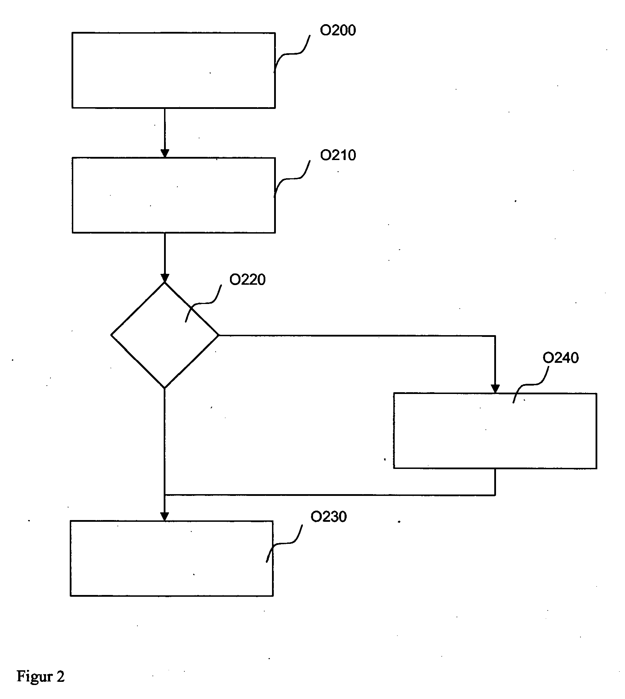

Figur 2 beschreibt den Ablauf für den Fall, dass ein Laufzeitobjekt eine spezielle Kennung erhält, die bedeutet, dass der Modus, in dem sich das Prozessorsystem zu einem gegebenen Zeitpunkt befindet, nicht gewechselt wird, wenn dem Laufzeitobjekt mit dieser speziellen Kennung zu diesem Zeitpunkt Rechenzeit zugewiesen wird. D.h. das Laufzeitobjekt wird in dem Modus ausgeführt der gerade aktiv ist.

Im Schritt 0200 wird ein beliebiges Laufzeitobjekt ausgeführt. Im Schritt 0210 wird der Scheduler aufgerufen, der ein Laufzeitobjekt ermittelt, welches als nächstes Rechenzeit zugewiesen bekommt. Im nächsten Schritt 0220 wird ermittelt, ob das Laufzeitobjekt diesen speziellen Typ von Kennung besitzt. Wenn ja, wird im Schritt 0230 dem Laufzeitobjekt Rechenzeit zugewiesen. Besitzt das Laufzeitobjekt diesen speziellen Typ von Kennung nicht, wird im Schritt 0240 der Modus des Prozessorsystems entsprechend der Kennung des Laufzeitobjektes geändert und dann im Schritt 0230 dem Laufzeitobjekt Rechenzeit zugewiesen,

In einer anderen Ausführungsform erhält ein Laufzeitobjekt eine spezielle Kennung, die festlegt, dass es nach mindestens n Ausführungen in einem Modus, mindestens einmal (m-Mal) in einem anderen Modus ausgeführt wird. Diese Ausführungsformen können auch untereinander oder mit dem in Figur 2 beschriebenen Verfahren kombiniert werden.

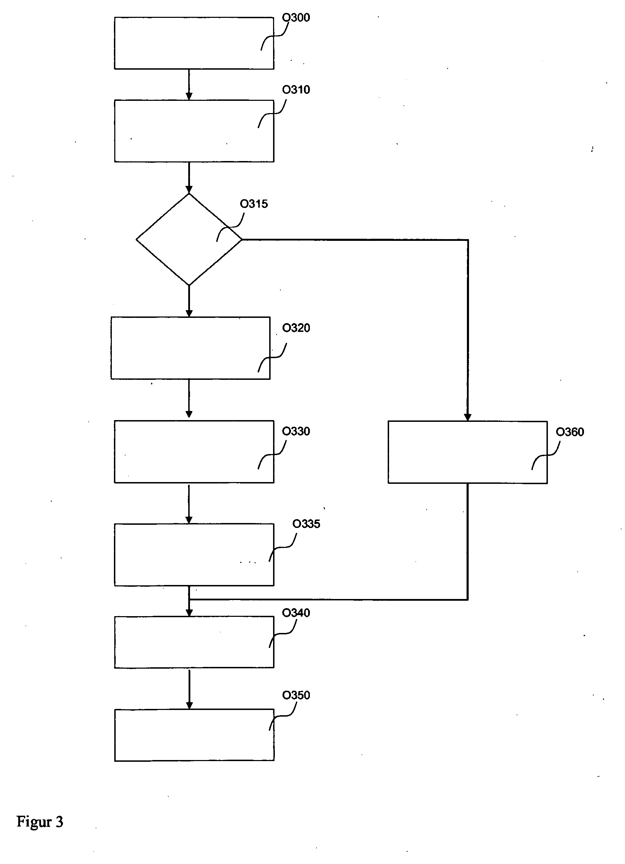

Figur 3 beschreibt weitere Ausführungsformen dieser Idee. In einer Ausführungsform erhält ein Laufzeitobjekt eine spezielle Kennung, welche festlegt, dass das Laufzeitobjekt wechselseitig in beiden Modi ausgeführt werden soll. Optional kann noch angegeben sein, nach wie vielen Aktivierungen in einem der Modi zu einem anderen und zu welchem Modus gewechselt werden soll.

Zunächst wird im Schritt 0300 ein beliebiges Laufzeitobjekt ausgeführt. Im Schritt 0310 wird der Scheduler aufgerufen, der ein Laufzeitobjekt ermittelt, welches als nächstes Rechenzeit zugewiesen bekommt. Im Schritt 0315 wird ermittelt, welchen Typ von Kennung das Laufzeitobjekt besitzt. Besitzt das Laufzeitobjekt diesen speziellen Typ von Kennung werden im Schritt 0320 dann die Informationen über die vergangenen Ausführungen dieses Laufzeitobjekts ermittelt. In einer bevorzugten Implementierung sind diese als ein oder mehrere Zählerstände, optional gekoppelt mit zugehörigen Modusinformationen, abgelegt. Eine Möglichkeit der Implementierung über Zählerstände ist es, dass einem solchen Ausführungsobjekt für jeden der ihm erlaubten Modi ein Zähler zugeordnet wird, der zählt, wie oft es in diesem Modus ausgeführt wurde. Optional können die Zähler einem Reset unterworfen werden, der zeitlich oder durch andere Bedingungen ausgelöst wird. Diese Implementierung ist dann vorteilhaft, wenn für das Laufzeitobjekt beispiekweise garantiert werden soll, dass es von n Ausführungen n1 im Modus 1, n2 im Modus 2, n3 im Modus 3, ... durchführen soll. Ein Reset der Zähler kann dann Vorteilhafterweise nach n Ausführungen geschehen. Eine andere Implementierungsmöglichkeit für die Zählerstände ist es, nur einen Zählerstand abzulegen. Dies ist besonders dann vorteilhaft, wenn es nur zwei erlaubte Modi gibt. Dann zählt der Zähler beispielsweise, wie oft das Laufzeitobjekt in Modus 1 ausgeführt wurde. Alternativ zählt der Zähler, wie oft das Laufzeitobjekt in dem Modus ausgeführt wurde, der beim letzten Mal verwendet wurde. Im Schritt 0330 wird aus diesen Informationen der nächste zu verwendende Modus ermittelt. Falls die Informationen über Zähler und zugehörige Modusinformation implementiert sind, gibt es eine Vielzahl von Algorithmen, die verwendet werden können, um den nächsten erlaubten Modi festzulegen. In einem ersten Ausführungsform werden zunächst alle Ausführungen, die im Modus 1 innerhalb einer Periode zu machen sind, durchgeführt, dann alle im Modus 2 usw. In einer zweiten Ausführungsform wird immer zyklisch gewechselt. In einer dritten Ausführungsform wird relativ zum Default-Anteil der Modi der ausgewählt, der im Rahmen der bisherigen Ausführungen den niedrigsten Anteil hatte. In einer vierten Ausführungsform wird die aktuelle Modusinformation mit einbezogen und bevorzugt ein solcher Modus gewählt, der gerade verwendet wird.

Im letzten Schritt 0335 werden die Informationen über die Ausführung, z.B. die Zählastände, aktualisiert.

Im Schritt 0340 wird dann der entsprechende benötigte Modus für das Laufzeitobjekt im Prozessorsystem eingestellt und im Schritt 0350 dann dem Laufzeitobjekt die benötigen Rechenzeitressourcen zugeteilt.

Wird in Schritt 0315 ermittelt, dass das Laufzeitobjekt nicht die spezielle Kennung besitzt wird im Schritt 0360 der für diesen Objekt notwendige Modus ermittelt und mit Schritt 0340 fortgefahren.

Das hier beschriebene Verfahren ermöglicht es z.B. im Fall von nur zwei möglichen Modi, ein gegebenes Laufzeitobjekt z.B. 9 von 10 Mal im Performanzmodus auszuführen und nur ein Mal im Vergleichsmodus. Dadurch wird zunächst der Performanzmodus optimal ausgenutzt. Andererseits ermöglicht dies auch eine anforderungsgerechte Implementierung der Laufzeitobjekte. Insbesondere wird dadurch eine Fehlererkennung permanenter Fehler und transienter Fehler unterscheidbar und die Implementierung ermöglicht es, hauptsächlich für permanente Fehler eine Fehlererkennungsstrategie zu benutzen, währen für transiente Fehler eine Robustheits- oder Fehlertolerierungsstrategie verwendet werden kann.

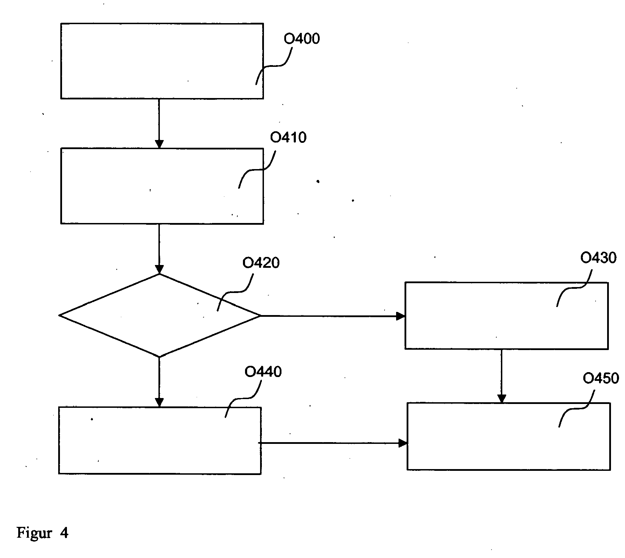

In Figur 4 wird die Kopplung dieser Idee mit bestimmten Systemmodi dargestellt. Die Grundidee ist es, dass ein Laufzeitobjekt eine spezielle Kennung erhält, die festlegt, dass es nur unter bestimmten Systembedingungen in einem ausgezeichneten Modus ausgeführt wird. Beispielsweise soll immer in einer Systemrückfallebene ein spezieller Vergleichsmodus verwendet werden. Entsprechendes kann auch für eine Initialisierung oder eine spezielle Testphase, die z.B. periodisch (z.B. alle 10 ms) oder auf Anforderung hin auftritt, gelten.

Zunächst wird im Schritt 0400 ein beliebiges Laufzeitobjekt ausgeführt. Im Schrit 0410 wird der Scheduler aufgerufen, der ein Laufzeitobjekt ermittelt, welches als nächstes Rechenzeit zugewiesen bekommt. Daraufhin wird im Schritt 0420 geprüft ob dieses Laufzeitobjekt diese spezielle Kennung besitzt und ob eine der Sonderbedingungen vorliegt. Diese können, wie gerade beschrieben zum Beispiel durch eine Initialisierung, eine Rüdcfallebene oder eine Testphase begründet sein. Falls diese Sonderbedingung vorliegt, wird im Schritt 0430 der dafür vorgesehene Modus im Prozessorsystem eingestellt. Falls dies nicht der Fall ist, wird im Schritt 0440 ein Default-Modus ausgewählt oder einer der in der Beschreibung von Figur 3 erwähnten Algorithmen verwendet. In beiden Fällen wird anschließend im Schritt 0450 dem Laufzeitobjekt Rechenzeit zugewiesen

## Patentansprüche

1. Verfahren zur Steuerung eines Rechnersystems mit wenigstens zwei Ausführungseinheiten, wobei zwischen wenigstens zwei Betriebsmodi umgeschaltet wird und ein erster Betriebsmodus einem Vergleichsmodus und ein zweiter Betriebsmodus einem Performanzmodus entspricht, **dadurch gekennzeichnet, dass** Laufzeitobjekte vorgesehen sind, dass die Laufzeitobjekto zu verschiedenen Zeiten in den verschiedenen Betriebsmodi ausgeführt werden können, dass den Laufzeitobjekten wenigstens eine Kennung zugeordnet ist und die Kennung für die Koordination der Umschaltung zwischen den wenigstens beiden Betriebsmodi verwendet wird, und dass in der Kennung eine Information darüber enthalten ist nach höchstens wie vielen Aktivierungen eines Laufzeitobjekts in einem der Betriebsmodi, das Laufzeitobjekt in einem anderen Betriebsmodus ausgeführt werden soll.

2. Verfahren nach Anspruch 1, **dadurch gekennzeichnet, dass** die Kennung derart verwendet wird, dass das Laufzeitobjekt abwechselnd in verschiedenen Betriebsmodi ausgeführt werden soll.

3. Verfahren nach einem der Ansprüche 1 oder 2, **dadurch gekennzeichnet, dass** zur Festlegung des Betriebsmodus, in dem ein Laufzeitobjekt zu einem vorgebbaren oder vorgegebenen Zeitpunkt ausgeführt werden soll, eine Information darüber verwendet wird, in welchem Betriebsmodus das Laufzeitobjekt zuvor ausgeführt wurde.

4. Verfahren nach Anspruch 3, **dadurch gekennzeichnet, dass** wenigstens ein Teil der Information inkrementiert oder dekrementiert wird.

5. Verfahren nach einem der Ansprüche 1 bis 4, **dadurch gekennzeichnet, dass** zur Festlegung des Betriebsmodus, in dem ein Laufzeitobjekt zu einem vorgebbaren oder vorgegebenen Zeitpunkt ausgeführt werden soll, eine Information darüber verwendet wird, in welchem Betriebsmodus sich das Rechnersystem befindet.

6. Verfahren nach einem der Ansprüche 1 bis 5, **dadurch gekennzeichnet, dass** zur Festlegung des Betriebsmodus, in dem ein Laufzeitobjekt zu einem vorgebbaren oder vorgegebenen Zeitpunkt ausgeführt werden soll, eine Information darüber verwendet wird, in welcher Rückfallebene sich das Rechnersystem befindet.

7. Verfahren nach einem der Ansprüche 1 bis 6, **dadurch gekennzeichnet, dass** zur Festlegung des Modus, in dem ein Laufzeitobjekt zu einem vorgebbaren oder vorgegebenen Zeitpunkt ausgeführt werden soll, eine Information darüber verwendet wird, ob sich das Rechnersystem in einer Initialisierung befindet.

8. Verfahren nach einem der Ansprüche 1 bis 7, **dadurch** charakterisiert, dass zur Festlegung des Modus, in dem ein Laufzeitobjekt zu einem vorgebbaren oder vorgegebenen Zeitpunkt ausgeführt werden soll, eine Information darüber verwendet wird, ob sich das Rechnersystem in einer Testphase befindet.

9. Vorrichtung zur Steuerung eines Rechnersystems mit wenigstens zwei Ausführungseinheiten, mit Umschaltmitteln und mit Vergleichsmitteln, wobei zwischen wenigstens zwei Betriebsmodi umgeschaltet wird und ein erster Betriebsmodus einem Vergleichsmodus und ein zweiter Betriebsmodus einem Performanzmodus entspricht, **dadurch gekennzeichnet, dass** die Vorrichtung Speichermittel enthält, in denen für Laufzeitobjekte Kennungen abgespeichert sind, die Kennung für die Koordination der Umschaltung zwischen den wenigstens beiden Betriebsmodi verwendet wird, und dass die Laufzeitobjekte zu verschiedenen Zeiten in den verschiedenen Betriebsmodi ausgeführt werden können, und dass in der Kennung eine Information darüber enthalten ist nach höchstens wie vielen Aktivierungen eines Laufzeitobjekts in einem der Betriebsmodi, das Laufzeitobjekt in einem anderen Betriebsmodus ausgeführt werden soll.

10. Vorrichtung nach Anspruch 9, **dadurch gekennzeichnet, dass** diese derart ausgestaltet ist, dass die Kennung derart verwendet wird, dass das Laufzeitobjekt abwechselnd in verschiedenen Betriebsmodi ausgeführt werden.

11. Vorrichtung nach einem der Ansprüche 9 oder 10, **dadurch gekennzeichnet, dass** diese derart ausgestaltet ist, dass zur Festlegung des Betriebsmodus, in dem zu einem vorgebbaren oder vorgegebenen Zeitpunkt ein Laufzeitobjekt ausgeführt werden soll, eine Information darüber verwendet wird, in welchem Betriebsmodus das Laufzeitobjekt zuvor ausgeführt wurde.

12. Vorrichtung nach Anspruch 11. **dadurch gekennzeichnet, dass** wenigstens ein Teil dieser Information mittels Zählmitteln implementiert ist.

13. Vorrichtung nach einem der Ansprüche 9 bis 12, **dadurch gekennzeichnet, dass** Umschalt- und/oder Vergleichsmittel enthalten sind, die derart ausgestaltet sind, dass diese eine Umschaltung der Betriebsmodi in Abhängigkeit der Kennung und weiterer vorgebbarer Bedingungen durchführen kann.

14. Rechnersystem mit den Vorrichtungen nach Anspruch 9 bis 13.

## Claims

1. Method for controlling a computer system having at least two execution units, wherein changeover occurs between at least two modes of operation, and a first mode of operation corresponds to a comparison mode and a second mode of operation corresponds to a performance mode, **characterized in that** runtime objects are provided, **in that** the runtime objects can be executed at different times in the different modes of operation, **in that** the runtime objects have at least one associated identifier and the identifier is used for coordinating the changeover between the at least two modes of operation, and **in that** the identifier contains a piece of information about the maximum number of times a runtime object is activated in one of the modes of operation before the runtime object needs to be executed in another mode of operation.

2. Method according to Claim 1, **characterized in that** the identifier is used such that the runtime object needs to be executed alternately in different modes of operation.

3. Method according to one of Claims 1 and 2, **characterized in that** the mode of operation in which a runtime object needs to be executed at a prescribable or prescribed time is stipulated by using a piece of information about the mode of operation in which the runtime object was executed previously.

4. Method according to Claim 3, **characterized in that** at least some of the information is incremented or decremented.

5. Method according to one of Claims 1 to 4, **characterized in that** the mode of operation in which a runtime object needs to be executed at a prescribable or prescribed time is stipulated by using a piece of information about which mode of operation the computer system is in.

6. Method according to one of Claims 1 to 5, **characterized in that** the mode of operation in which a runtime object needs to be executed at a prescribable or prescribed time is stipulated by using a piece of information about which fallback level the computer system is on.

7. Method according to one of Claims 1 to 6, **characterized in that** the mode in which a runtime object needs to be executed at a prescribable or prescribed time is stipulated by using a piece of information about whether the computer system is being initialized.

8. Method according to one of Claims 1 to 7, **characterized in that** the mode in which a runtime object needs to be executed at a prescribable or prescribed time is stipulated by using a piece of information about whether the computer system is in a test phase.

9. Apparatus for controlling a computer system having at least two execution units, having changeover means and having comparison means, wherein changeover occurs between at least two modes of operation, and a first mode of operation corresponds to a comparison mode and a second mode of operation corresponds to a performance mode, **characterized in that** the apparatus contains memory means which store identifiers for runtime objects, the identifier is used for coordinating the changeover between the at least two modes of operation, and **in that** the runtime objects can be executed at different times in the different modes of operation, and **in that** the identifier contains a piece of information about the maximum number of times a runtime object is activated in one of the modes of operation before the runtime object needs to be executed in another mode of operation.

10. Apparatus according to Claim 9, **characterized in that** it is designed such that the identifier is used such that the runtime object is executed alternately in different modes of operation.

11. Apparatus according to one of Claims 9 and 10, **characterized in that** it is designed such that the mode of operation in which a runtime object needs to be executed at a prescribable or prescribed time is stipulated by using a piece of information about the mode of operation in which the runtime object was executed previously.

12. Apparatus according to Claim 11, **characterized in that** at least some of this information is implemented by means of counting means.

13. Apparatus according to one of Claims 9 to 12, **characterized in that** changeover and/or comparison means are contained which are designed such that they can change over the modes of operation on the basis of the identifier and further prescribable conditions.

14. Computer system having the apparatuses according to Claims 9 to 13.

## Revendications

1. Procédé pour commander un système informatique comprenant au moins deux unités d'exécution, une permutation ayant lieu entre au moins deux modes de fonctionnement et un premier mode de fonctionnement correspondant à un mode de comparaison et un deuxième mode de fonctionnement à un mode performant, **caractérisé en ce que** sont prévus des objets à durée d'exécution, **en ce que** les objets à durée d'exécution peuvent être exécutés à différents moments dans les différents modes de fonctionnement, **en ce qu'**au moins un identifiant est attribué aux objets à durée d'exécution et l'identifiant est utilisé pour la coordination de la permutation entre les au moins deux modes de fonctionnement, et **en ce que** l'identifiant contient une information sur le nombre maximum d'activations d'un objet à durée d'exécution dans l'un des modes de fonctionnement après lesquelles l'objet à durée d'exécution doit être exécuté dans un autre mode de fonctionnement.

2. Procédé selon la revendication 1, **caractérisé en ce que** l'identifiant est utilisé de telle sorte que l'objet à durée d'exécution doive être exécuté en alternance dans différents modes de fonctionnement.

3. Procédé selon l'une des revendications 1 ou 2 **caractérisé en ce qu'**une information sur le mode de fonctionnement dans lequel l'objet à durée d'exécution a été exécuté précédemment est utilisée pour définir le mode de fonctionnement dans lequel un objet à durée d'exécution doit être exécuté à un instant à prédéfinir ou prédéfini.

4. Procédé selon la revendication 3, **caractérisé en ce qu'**au moins une partie de l'information est incrémentée ou décrémentée.

5. Procédé selon l'une des revendications 1 à 4, **caractérisé en ce qu'**une information sur le mode de fonctionnement dans lequel se trouve le système informatique est utilisée pour définir le mode de fonctionnement dans lequel un objet à durée d'exécution doit être exécuté à un instant à prédéfinir ou prédéfini.

6. Procédé selon l'une des revendications 1 à 5, **caractérisé en ce qu'**une information sur le plan de repli dans lequel se trouve le système informatique est utilisée pour définir le mode de fonctionnement dans lequel un objet à durée d'exécution doit être exécuté à un instant à prédéfinir ou prédéfini.

7. Procédé selon l'une des revendications 1 à 6, **caractérisé en ce qu'**une information sur le fait que le système informatique se trouve ou non en phase d'initialisation est utilisée pour définir le mode de fonctionnement dans lequel un objet à durée d'exécution doit être exécuté à un instant à prédéfinir ou prédéfini.

8. Procédé selon l'une des revendications 1 à 7, **caractérisé en ce qu'**une information sur le fait que le système informatique se trouve ou non dans une phase de test est utilisée pour définir le mode de fonctionnement dans lequel un objet à durée d'exécution doit être exécuté a un instant à prédéfinir ou prédéfini.

9. Dispositif pour commander un système informatique comprenant au moins deux unités d'exécution, comprenant des moyens de permutation et des moyens de comparaison, une permutation ayant lieu entre au moins deux modes de fonctionnement et un premier mode de fonctionnement correspondant à un mode de comparaison et un deuxième mode de fonctionnement à un mode performant, **caractérisé en ce que** le dispositif contient des moyens de mémoire dans lesquels sont enregistrés des identifiants pour des objets à durée d'exécution, l'identifiant étant utilisé pour la coordination de la permutation entre les au moins deux modes de fonctionnement, et **en ce que** les objets à durée d'exécution peuvent être exécutés à différents moments dans les différents modes de fonctionnement, et **en ce que** l'identifiant contient une information sur le nombre maximum d'activations d'un objet à durée d'exécution dans l'un des modes de fonctionnement après lesquelles l'objet à durée d'exécution doit être exécuté dans un autre mode de fonctionnement.

10. Dispositif selon la revendication 9, **caractérisé en ce que** celui-ci est configuré de telle sorte que l'identifiant est utilisé de manière à ce que l'objet à durée d'exécution soit exécuté en alternance dans différents modes de fonctionnement.

11. Dispositif selon l'une des revendications 9 ou 10, **caractérisé en ce que** celui-ci est configuré de telle sorte qu'une information sur le mode de fonctionnement dans lequel l'objet à durée d'exécution a été exécuté précédemment soit utilisée pour définir le mode de fonctionnement dans lequel un objet à durée d'exécution doit être exécuté à un instant à prédéfinir ou prédéfini.

12. Dispositif selon la revendication 11; **caractérisé en ce qu'**au moins une partie de cette information est mise en oeuvre à l'aide de moyens de comptage.

13. Dispositif selon l'une des revendications 9 à 12, **caractérisé en ce qu'**il contient des moyens de permutation et/ou de comparaison qui sont configurés de telle sorte que ceux-ci puissent réaliser une permutation des modes de fonctionnement en fonction de l'identifiant et d'autres conditions à prédéfinir.

14. Système informatique doté des dispositifs selon les revendications 9 à 13.
